(19) Europäisches Patentamt
European Patent Office
Office européen des brevets

(11) Veröffentlichungsnummer: **0 224 138 B1**

# (12) EUROPÄISCHE PATENTSCHRIFT

(45) Veröffentlichungstag der Patentschrift: **29.05.91**

(51) Int. Cl.5: **C09K 21/14**, C09D 5/18

(21) Anmeldenummer: **86115786.5**

(22) Anmeldetag: **13.11.86**

Die Akte enthält technische Angaben, die nach dem Eingang der Anmeldung eingereicht wurden und die nicht in dieser Patentschrift enthalten sind.

## (54) Gegebenenfalls poröse Intumeszenzmassen.

(30) Priorität: **26.11.85 DE 3541687**

(43) Veröffentlichungstag der Anmeldung:
**03.06.87 Patentblatt 87/23**

(45) Bekanntmachung des Hinweises auf die Patenterteilung:
**29.05.91 Patentblatt 91/22**

(84) Benannte Vertragsstaaten:
**AT DE FR GB IT NL SE**

(56) Entgegenhaltungen:
**EP-A- 0 120 253**
**EP-A- 0 142 074**
**EP-A- 0 217 080**
**GB-A- 2 071 111**

(73) Patentinhaber: **BAYER AG**
**W-5090 Leverkusen 1 Bayerwerk(DE)**

(72) Erfinder: **von Bonin, Wulf, Dr.**
**Mendelssohnstrasse 30**
**W-5090 Leverkusen 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Die vorliegende Erfindung betrifft gegebenenfalls poröse Intumeszenzmassen, enthaltend Carbonisierungshilfsmittel, Füllstoffe und gegebenenfalls weitere Hilfsmittel, erhältlich durch Umsetzung von gegebenenfalls Phosphor oder Bor enthaltenden, mit Isocyanaten reaktionsfähigen Verbindungen mit Polyisocyanaten in Gegenwart von Polyepoxiden.

Die erfindungsgemäßen Intumeszenzmassen zeichnen sich durch überraschend gutes Verhalten im Brandfalls aus, obgleich keine speziellen Epoxidharzvernetzer zur Anwendung kommen.

Isocyanat-vernetzte Intumeszenzmassen sind seit längerem bekannt (vgl. DE-OS 33 06 698, DE-OS 33 02 416, DE-OS 31 09 352). Sie haben bei guter Intumeszenz (d. h. Ausbildung eines flammwidrigen Carbonisierungsschaumes bei Beflammung) den anwendungstechnischen Vorteil, daß nach Vermischung der flüssigen Komponenten des Reaktionsgemisches dieses als relativ dünnflüssiges Material vergossen oder versprüht werden kann und dann nach im Minutenbereich liegenden Verweilzeiten verfestigt ist, wobei zuvor gegebenenfalls noch die Ausbildung einer porösen, bzw. schaumigen Struktur erfolgt.

Intumeszenzmassen auf Epoxidharzbasis, insbesondere auf Basis amingehärteter, also kalthärtender Epoxidharzformulierungen sind ebenfalls bekannt (vgl. DE-OS 33 03 702). Derartige Materialien haben ein mäßiges bis gutes Intumeszenzverhalten, zeichnen sich aber dadurch aus, daß der gebildete Intumeszenzschaum eine gute Beständigkeit gegen Flammenerosion hat, d. h. daß er fest genug ist, auch der oxidativen und insbesondere mechanischen Belastung durch den Aufprall der Flammengase bei hohen Temperaturen genug Widerstand zu bieten, um gute und sehr gute Schutzwirkungen gegen den Wärmedurchtritt zu ermöglichen.

Andererseits haben die kalthärtenden Epoxidharze so lange Topfzeiten, d. h. Zeiten, in denen das Reaktionsgemisch fließfähig bleibt, daß bei Raumtemperatur versprühbare Reaktionsgemische nur in relativ dünnen Schichten auf Unterlagen, z. B. Wandflächen, aufgebracht werden können, ohne abzulaufen oder abzutropfen. Es wäre wünschenswert, ein Intumeszenzmaterial mit den guten brandtechnischen Eigenschaften der Epoxidharz-Intumeszenzmassen zu haben, das aber das anwendungstechnisch vorteilhafte Verfestigungsverhalten der Isocyanat vernetzten Intumeszenzmassen aufweist.

Da die aminischen Härter der Epoxidharzmassen sofort mit Isocyanaten abreagieren, ist eine Kombination beider Systeme nicht möglich.

Es wurde nun aber überraschenderweise festgestellt, daß es nicht erforderlich ist, zur Erzielung der gewünschten brandtechnischen Vorteile in einer solchen Kombination die aminischen Epoxidharzhärter mitzuverwenden: das bedeutet, daß sich überraschenderweise herausgestellt hat, daß allein die Epoxid-Komponente der Epoxidharze zur Erzielung der guten brandtechnischen Eigenschaften der Epoxidharz-Intumeszenzmassen ausreicht.

Von diesem überraschenden Befund geht die vorliegende Erfindung aus, indem nunmehr die Polyepoxide den isocyanatvernetzten Intumeszenzmassen als Träger zugesetzt werden.

Gegenstand der vorliegenden Erfindung sind somit gegebenenfalls poröse Intumeszenzmassen enthaltend Carbonisierungshilfsmittel, Füllstoffe und gegebenenfalls weitere Hilfsmittel, erhältlich durch Umsetzung von Polyisocyanaten mit gegebenenfalls Phosphor- oder Bor enthaltenden, mit Isocyanaten reaktionsfähigen Verbindungen in Gegenwart von Polyepoxiden.

Die erfindungsgemäßen Intumeszenzmassen zeichnen sich durch überraschend gutes Verhalten im Brandfall aus, obgleich keine speziellen Epoxidharze als Vernetzer zur Anwendung kommen.

Als Carbonisierungshilfsmittel werden solche Zusätze verstanden, die bei Beflammung die Ausbildung eines Carbonisierungsschaumes begünstigen, d. h. die Carbonisierung auf Kosten einer destillativen Zersetzung fördern gegebenenfalls auch katalysieren. Solche Zusätze entwickeln bei Beflammung sauer wirkende Komponenten im Pyrolysegemisch, etwa Schwefelsäuren, Phosphorsäuren oder Borsäuren.

Demzufolge handelt es sich bei den Carbonisierungshilfsmitteln z` B. um Säuren oder Salze oder deren Abkömmlinge von Schwefel, Bor oder Phosphor, vorzugsweise um solche mit geringer Wasserlöslichkeit wie Phosphate und Polyphosphate von Ammoniak, Ethylendiamin, Melamin, Alkanolaminen. Es kommen aber auch Borsäure und deren Salze, Sulfate, elementarer Schwefel, Phosphor oder Phosphonsäuren bzw. Phosphinsäuren und deren Abkömmlinge sinngemäß in Betracht.

In der Gesamt-Intumeszenzmasse sind solche Carbonisierungshilfsmittel in Mengen von 5 bis 65 Gew.-% enthalten, vorzugsweise 9 bis 40 Gew.-%, jeweils bezogen auf die Intumeszensmasse. Diese Zusätze können Feststoffe oder Flüssigkeiten sein. Besonders bevorzugt werden Ethylendiaminphosphat, Melaminphosphat bzw. Melaminpyrophosphat oder Ammonpolyphosphat, auch Ester der Methylphosphonsäure oder der Phosphor säure sind von Interesse.

Als Füllstoffe werden solche im Reaktionsgemisch enthaltenen, zumeist darin unlösliche Stoffe verstanden, die entweder wie Melamin, Harnstoff, Dicyandiamid und andere Cyanursäureabkömmlinge oder deren

Formaldehydharze zur Entwicklung flammwidriger Gase bei Beflammung Anlass geben bzw. zur Bildung von Carbonisierungsschaum beitragen, oder auch sonstige organische Zuschlagstoffe wie Holzmehle, Kohlehydrate, Pentaerythrit und andere Polyalkohole und deren Oligomerisate, Phenolharzpulver, bituminöse Zusätze, gegebenenfalls oberhalb 100 °C auftreibende Graphite und Graphitverbindungen, Kokspulver, Polymere in Form von Kunststoffpulvern.

Als Füllstoffe kommen aber auch trockene oder kristallwasserhaltige oder wasserabspaltende anorganische Füllstoffe in Betracht, seien es Metalle, Oxide, Carbonate, Sulfate, Phosphate, Borate oder Silikate, wie Glas oder z. B. Aluminiumoxyd-Hydrate, Gipse, Kreide, Dolomit, Talkum, gegebenenfalls blähfähige Glimmertypen, Apatit, Kaolin, Ca-Silikate, Flugaschen. Bevorzugt werden Glasperlen, silikatische Hohlperlen, insbesondere dehydratisierbare Al-Hydroxide.

Die Füllstoffe können, wie natürlich auch andere Zusatzstoffe, im Gemisch eingesetzt werden. Sie können als Pulver, als Perlen oder Hohlperlen vorliegen, gegebenenfalls auch in Faserform. Die Zusatzmengen liegen zwischen 0 und 80 Gew.-%, vorzugsweise 10 bis 60 Gew.-% (bezogen auf Intumeszenzmasse).

Als weitere Hilfsmittel, die zumeist in Mengen von weniger als 10, vorzugsweise 0 - 5 Gew.-% (bezogen auf Intumeszenzmasse), Verwendung finden, kommen z. B. Aktivatoren und Katalysatoren in Frage, wie Sn-, Pb- oder Ce-Octoate oder t.-Amine, wie sie zur Beschleunigung der Isocyanatreaktionen in der Technik verwendet werden und dem Fachmann geläufig sind oder auch Tenside und Stabilisatoren, Farbstoffe und Farbpigmente, Trennmittel, Geruchsstoffe oder bioaktive Wirkstoffe, z. B. Fungistatika oder Nager-Repellents. Es können aber auch Weichmacher wie z. B. aromatische Phosphorsäureester als weitere Hilfsmittel Verwendung finden.

Als mit Isocyanaten reaktionsfähige Verbindungen werden die dem Fachmann geläufigen Zerewitinoff-aktiven in der Polyurethanchemie zum Einsatz kommenden Verbindungen bezeichnet, zumeist handelt es sich um Polyether- oder Polyesterpolyole oder -polyamine, die in der Regel ein Molekulargewicht von 32 bis 10.000, vorzugsweise von 200 bis 6.000, aufweisen.

Im erfindungsgemäßen Zusammenhang sei hier auch auf die durch Öffnung des Epoxidringes der Polyepoxidharzkomponenten zugänglichen mit Isocyanaten reaktionsfähigen OH- oder gegebenenfalls auch NH-Verbindungen hingewiesen.

Von besonderem Interesse sind Phosphoratome enthaltende Polyole, z. B. Hydroxylgruppen enthaltende

- Ester von phosphorhaltigen Säuren wie Phosphorsäuren der verschiedenen Kondensationsgrade bis zur Metaphosphorsäure, oder von Phosphonsäuren, Phosphinsäuren, z. B. deren Alkoxylierungsprodukte bzw. Umsetzungsprodukte,
- Salze aus Hydroxylgruppen enthaltenden Aminen und den verschiedenen Phosphorsäuren, bzw.
- Amide der verschiedenen Phosphorsäuren, die Hydroxyl- oder NH-Gruppen enthalten,

bzw. deren Mischformen.

Vorzugsweise werden als mit Isocyanaten reaktionsfähige Verbindungen gegebenenfalls im Gemisch mit anderen die folgenden Typen verwendet:

Mindestens zwei Hydroxylgruppen aufweisende phosphorhaltige Kondensationsprodukte, wie sie z. B. durch Kondensation von gegebenenfalls OH-Gruppen enthaltenden primär oder sekundären aliphatischen, cycloalipihatischen, aromatischen, araliphatischen oder heterocyclischen Mono- und/oder Polyaminen, Carbonylverbindungen und Dialkylphosphiten, gegebenenfalls unter anschließendem Oxalkylieren, erhalten werden können. Derartige Kondensationsprodukte sind an sich bekannt, z. B. aus der DE-PS 1 143 022, US-PS 3 076 010, DE-AS 1 803 747 und DE-AS 1 928 265.

Die mit Isocyanaten reaktionsfähigen Verbindungen sind in der gesamten Intumeszenzmasse in Mengen von 3 bis 50 Gew.-%, vorzugsweise 5 bis 30 Gew.-% enthalten.

Die mitzuverwendenden Polyepoxide sind an sich bekannt. Als Polyepoxide seien beispielhaft die folgenden dem Fachmann zur Herstellung bzw. Formulierung von Epoxidharzen bekannten Polyepoxide aufgeführt, wobei sich die von aromatischen Grundkörpern abzuleitenden Polyepoxide besonders gut bewährt haben. Es ist auch möglich, bis zu 70 Gew.-% der Polyepoxide durch Monoepoxide zu ersetzen, wie dies auch bei den Polyepoxidharzen durch sogenannte Reaktivverdünner praktiziert werden kann.

Bei den Reaktivverdünnern handelt es sich zumeist um Glycidylether von substituierten Phenolen z. B. um Glycidylether von Phenylphenolgemischen oder Cyclohexylphenolgemischen.

Als Polyepoxide kommen z.B. die bekannten, vorzugsweise halogenfreien Polyepoxide in Betracht.

Das sind unter anderem Polyglycidylether mehrwertiger Phenole, beispielsweise aus Brenzkatechin, Resorcin, Hydrochinon, aus 4,4'-Dihydroxydiphenylmethan, aus 4,4'-Dihydroxy-3,3'-dimethyldiphenylmethan, aus 4,4'-Dihydroxydiphenyldimethylmethan (Bisphenol A), aus 4,4'-Dihydroxydiphenylmethan, aus 4,4'-Dihydroxydiphenylcyclohexan, aus 4,4'-Dihydroxy-3,3'-dimethyldiphenylpropan, aus 4,4'-Dihydroxydiphenyl, aus 4,4'-Dihydroxydiphenylsulfon, aus Tris-(4-hydroxyphenyl)-methan, aus Novolaken (d. h. aus

Umsetzungsprodukten von ein- oder mehrwertigen Phenolen mit Aldehyden, insbesondere Formaldehyd, in Gegenwart saurer Katalysatoren), aus Diphenolen, die durch Veresterung von 2 Mol des Natriumsalzes einer aromatischen Oxycarbonsäure mit einem Mol eines Dihalogenalkans oder Dihalogendialkylethers erhalten wurden (vgl. britische Patentschrift 1 017 612), aus Polyphenolen, die durch Kondensation von Phenolen und langkettigen, mindestens 2 Halogenatome enthaltenden Halogenparaffinen erhalten wurden (vgl. britische Patentschrift 1 024 288).

Weiter seien genannt: Glycidylether mehrwertiger Alkohole, beispielsweise aus 1,4-Butandiol, 1,4-Butendiol, Glycerin, Trimethylolpropan, Pentaerythrit und Polyethylenglykolen.

Außerdem kommen in Frage: Glycidylester mehrwertiger aromatischer, aliphatischer und cycloaliphatischer Carbonsäuren, beispielsweise Phthalsäurediglycidylester, Terephthalsäurediglycidylester, Tetrahydrophthalsäurediglycidylester, Adipinsäure-diglycidylester, Hexahydrophthalsäurediglycidylester, die gegebenenfalls durch Methylgruppen substituiert sein können, und Glycidylester von Umsetzungsprodukten aus 1 Mol eines aromatischen oder cycloaliphatischen Dicarbonsäureanhydrids und 1/2 Mol eines Diols bzw. 1/n Mol eines Polyols mit n Hydroxylgruppen, etwa Glycidylcarbonsäureester der allgemeinen Formel

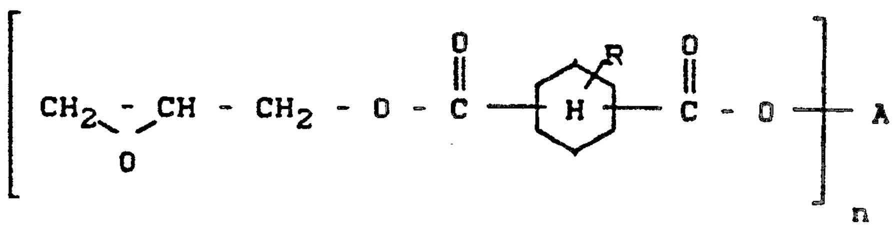

worin A einen mindestens 2-wertigen Rest eines gegebenenfalls durch Sauerstoff und/oder cycloaliphatische Ringe unterbrochenen, aliphatischen Kohlenwasserstoffs oder den 2-wertigen Rest eines cycloaliphatischen Kohlenwasserstoffs, R Wasserstoff oder Alkylrest mit 1-3 C-Atomen und n eine Zahl zwischen 2 bis 6 bedeuten, oder Mischungen von Glycidylcarbonsäureestern der angegebenen allgemeinen Formel (vgl. britische Patentschrift 1 220 702).

Besonders bevorzugt werden: 1,2-Polyepoxide mit mindestens einem tertiären Stickstoffatom pro Molekül, z. B. Bis-(N-epoxypropyl)-anilin, Bis-(N-epoxapropyl)-butylamin, Bis-(N-epoxypropyl)-4-amino-phenylglycidylether, Triglycidylisocyanurat, N,N'-Diepoxypropyloxamid, Triglycidyl-1,2,4-triazolidin-3,5-dione gemäß DE-OS 2 935 354, Glycidyl-1,2,4-triazolidin-3,5-dione mit 2 bis 10 Glycidylgruppen gemäß DE-OS 3 027 623, N,N'-Diglycidyl-bis-hydantoinylverbindungen gemäß DE-AS 1 670 490, N,N'-Diglycidylverbindungen von cyclischen Ureiden gemäß britischer Patentschrift 1 148 570, DE-PS 2 263 492 und DE-AS 1 954 503, Polyurethandiglycidylether gemäß US-PS 2 830 038, DE-AS 1 947 001 und DE-AS 1 966 182, Imidgruppen enthaltende Diglycidylester gemäß DE-AS 2 306 403.

Die vorstehenden 1,2-Polyepoxide mit mindestens einem tertiären Stickstoffatom pro Molekül können mit stickstoffreien 1,2-Polyepoxiden, insbesondere mit Polyglycidylethern mehrwertiger Phenole z. B. des Bisphenol A, abgemischt werden. Bevorzugte lösungsmittelfreie Intumeszenzmassen enthalten als Komponente 0 - 80 Gew.-% eines 1,2-Polyepoxids mit mindestens einem tertiären Stickstoffatom pro Molekül und 20 - 100 Gew.-% eines stickstoffreien aromatischen 1,2-Polyepoxids.

Die 1,2-Polyepoxide, insbesondere feste 1,2-Polyepoxide, können zur Viskositätserniedrigung auch mit weiteren Reaktivverdünnern, d. h. flüssigen Monoepoxiden wie Phenylglycidylether, tert.-Butylphenylglycidylethern, Allylglycidylether u. a. abgemischt werden.

Bevorzugt werden solche Polyepoxide oder Polyepoxidgemische, die auf Basis des Bisphenol-A-bisglycidylethers und seiner Oligomeren technische Anwendung finden.

In den erfindungsgemäßen Intumeszenzmassen sind die Polyepoxide in Mengen von 5 bis 50 Gew.-%, vorzugsweise 10 bis 35 Gew.-% enthalten , jeweils bezogen auf die Intumeszenzmasse.

Das erfindungsgemäße Reaktionsgemisch wird mit Polyisocyanaten zur Umsetzung gebracht.

Die zum Einsatz gelangende Isocyanatmenge wird durch den Äquivalentbedarf der im Reaktionsgemisch enthaltenden mit Isocyanaten reaktionsfähigen Verbindungen bestimmt. Da alle Komponenten des Reaktionsgemisches hygroskopisch sind, bzw. Adsorptionswasser enthalten, enthält das Reaktionsgemisch stets auch (gegebenenfalls durch Zusatz von trockenen Zeolithen maskierbare) Feuchtigkeit, die gegebenenfalls sogar erwünscht und zugesetzt ist, um eine gewisse Porosität der Intumeszenzmassen herbeizuführen. Diese ist gleichfalls zu berücksichtigen gegebenenfalls indem eine Wasserbestimmung nach üblichen Methoden vorgenommen wird, z. B. titrimetrisch nach K. Fischer, gegebenenfalls nach vorheriger azeotroper Abtrennung des Wassers. Die zum Einsatz gelangende Menge an Polyisocyanat soll 70 bis 200, vorzugsweise 90 bis 140 Gew.-% der stöchiometrisch erforderlichen Isocyanatmenge betragen.

Als Polyisocyanate sind prinzipiell die aus der Polyurethanchemie bekannten Isocyanate geeignet, beispielsweise eignen sich als Ausgangskomponenten aliphatische, cycloaliphatische, araliphatische, aromatische und heterocyclische Polyisocyanate, wie sie z. B. von 4, Siefken in Justus Liebigs Annalen der Chemie, 562, Seiten 75 bis 136, beschrieben werden, beispielsweise solche der Formel

$Q\ (NCO)_n$

in der
n = 2-4, vorzugsweise 2,
und

Q einen aliphatischen Kohlenwasserstoffrest mit 2-18, vorzugsweise 6-10 Atomen,
einen cycloaliphatischen Kohlenwasserstoffrest mit 4-15, vorzugsweise 5-10 C-Atomen,
einen aromatischen Kohlenwasserstoffrest mit 6-15, vorzugsweise 6-13 C-Atomen,
oder einen araliphatischen Kohlenwasserstoffrest mit 8-15, vorzugsweise 8-13 C-Atomen,

bedeuten, z. B. Ethylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DE-Auslegeschrift 1 202 785, US-Patentschrift 3 401 190), 2,4- und 2,6-Hexahydrotoluylendiisocyanat sowie beliebige Gemische dieser Isomeren, Hexahydro-1,3- und/oder -1,4-phenylendiisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat.

Ferner kommen beispielsweise erfindungsgemäß In Frage:
Triphenylmethan-4,4',4"-triisocyanat, Polyphenyl-polymethylenpolyisocyanate, wie sie durch Anilin-Formaldehyd-Kondensation und anschließende Phosgenierung erhalten und z. B. in den GB-Patentschriften 874 430 und 848 671 beschrieben werden, m- und p-Isocyanatophenylsulfonyl-isocyanate gemäß der US-Patentschrift 3 454 606, perchlorierte Arylpolyisocyanate, wie sie z. B. in der DE-Auslegeschrift 1 157 601 (US-Patentschrift 3 277 138) beschrieben werden, Carbodiimidgruppen aufweisende Polyisocyanate, wie sie in der DE-Patentschrift 1 092 007 (US-Patentschrift 3 152 162) sowie in den DE-Offenlegungsschriften 2 504 400, 2 537 685 und 2 552 250 beschrieben werden, Norbornan-Diisocyanate gemäß US-Patentschrift 3 492 330, Allophanatgruppen aufweisende Polyisocyanate, wie sie z. B. in der GB-Patentschrift 994 890, der BE-Patentschrift 761 626 und der NL-Patentschrift 7 102 524 beschrieben werden, Isocyanuratgruppen aufweisende Polyisocyanate, wie sie z. B. in der US-Patentschrift 3 001 973, in den DE-Patentschriften 1 022 789, 1 222 067 und 1 027 394 sowie in den DE-Offenlegungsschriften 1 929 034 und 2 004 048 beschrieben werden, Urethangruppen aufweisende Polyisocyanate, wie sie z. B. in der BE-Patentschrift 752 261 oder in den US-Patentschriften 3 394 164 und 3 644 457 beschrieben werden, acylierte Harnstoffgruppen aufweisende Polyisocyanate gemäß der DE-Patentschrift 1 230 778, Biuretgruppen aufweisende Polyisocyanate, wie sie z. B. in den US-Patentschriften 3 124 605, 3 201 372 und 3 124 605 sowie in der GB-Patentschrift 889 050 beschrieben werden, durch Telomerisationsreaktionen hergestellte Polyisocyanate, wie sie z. B. in der US-Patentschrift 3 654 106 beschrieben werden, Estergruppen aufweisende Polyisocyanate, wie sie z. B. in den GB-Patentshriften 965 474 und 1 072 956, in der US-Patentschrift 3 567 763 und in der DE-Patentschrift 1 231 688 genannt werden, Umsetzungsprodukte der obengenannten Isocyanate mit Acetalen gemäß der DE-Patentschrift 1 072 385 und polymere Fettsäreester enthaltende Polyisocyanate gemäß der US-Patentschrift 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen, Ferner ist es möglich, beliebige Mischungen der vorgenannten Polyisocyanate zu verwenden.

Bevorzugt werden in der Regel die technisch leicht zugänglichen Polyisocyanate, z. B. das 2,4- und 2,6-Toluylendiisocyanat sowie beliebige Gemische dieser Isomeren ("TDI"), insbesondere aber die Polyisocyanate vom MDI-Typ, nämlich 4,4'- und/oder 2,4'-Diphenylmethandiisocyanat und/ oder Polyphenylpolymethylen-polyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate

("modifizierte Polyisocyanate"), insbesondere solche modifizierten Polyisocyanate, die sich vom 2,4- und/oder 2,6-Toluylendiisocyanat bzw, vom 4,4'- und/ oder 2,4'-Diphenylmethandiisocyanat ableiten.

Monoisocyanate können anteilig (bis zu höchstens 30 Gew.-%, bezogen auf Polyisocyanat) mitverwendet werden.

Erfindungsgemäß bevorzugt sind gegebenenfalls poröse Intumeszenzmaterialien, erhältlich durch Umsetzung von

1. Polyisocyanaten vom MDI-Typ mit (bezogen auf Gesamt-Intumeszenzmaterial)
2. 5 - 30 Gew.-% mindestens zwei Hydroxylgruppen aufweisenden phosphorhaltigen Kondensationsprodukten, erhältlich durch Kondensation von gegebenenfalls OH-Gruppen enthaltenden primären oder sekundären aliphatischen, cycloaliphatischen, aromatischen, araliphatischen oder heterocyclischen Mono- und/oder Polyaminen, Carbonylverbindungen und Dialkylphosphiten, gegebenenfalls unter anschließendem Oxalkylieren, und
3. 9 - 40 Gew.-% Carbonisierungshilfsmitteln auf Basis von Ammoniumpolyphosphaten und/oder Melaminphosphaten, und
4. 10 - 60 Gew.-% anorganischen Füllstoffen, vorzugsweise vom dehydratisierbaren Typ, und
5. 0 - 5 Gew.-% Katalysatoren, Farbpigmenten und Stabilisatoren und
6. 10 - 35 Gew.-% Polyepoxiden, bzw. Polyepoxidgemischen auf Basis von Bisphenol A-Glycidylethern.

Die Intumeszenzwerkstoffe gemäß Erfindung mit gegen Wasser ausgezeichnet beständigen Intumeszenzeigenschaften können massiv oder porig bzw. schaumstoffartig sein. Sie haben Dichten zwischen durchschnittlich etwa 0,03 und 1,8, vorzugsweise 0,1 und 1,0, insbesondere 0,2 und 0,8 g/m$^3$.

Konstruktionselemente für Brandschutzzwecke können ausschließlich aus den vorbeschriebenen Intumeszenzwerkstoffen bestehen, vorzugsweise können sie aber auch Werkstoffkombinationen darstellen und/oder sonstige Montage- oder Beschichtungshilfs- und Zusatzmittel zu Zwecken der speziellen Einsatzgebieten angepaßten Verarbeitbarkeit bzw. Anwendbarkeit, z. B. Verstärkungselemente oder/und Trägersubstrate enthalten.

Bei der Herstellung der erfindungsgemäßen Intumeszenzmaterialien kann kontinuierlich oder diskontinuierlich gearbeitet werden.

Die Herstellung der Intumeszenzmassen kann in einem Lösungsmittel, vorzugsweise jedoch lösungsmittelfrei, erfolgen. Von besonderem Interesse sind Schaumstoffe; diese können Raumgewichte von ca. 40 bis 900 kg/m$^3$, bevorzugt zwischen 180 und 700 kg/m$^3$, aufweisen. Eine besonders ausgewogene Kombination zwischen aus Gründen der Isolierfähigkeit angestrebtem niedrigen Raumgewicht und für die Aufschäumwirkung bei Flammenzutritt in der Raumeinheit notwendiger Masse stellen erfindungsgemäß zugängliche Schaumstoffe mit Raumgewichten von ca. 200 bis 600 kg/m$^3$ dar.

Man kann die verschiedenen Reaktionskomponenten einzeln zusammenführen; zweckmäßigerweise jedoch macht man eine Vormischung, in der alle notwendigen Bestandteile bis auf gegebenenfalls Katalysatoren und das Polyisocyanat enthalten sind. Auf diese Weise lassen sich die erfindungsgemäßen Intumeszenzmassen als Zweikomponentengemisch formulieren bzw. aus diesem herstellen. Hierzu sind die üblichen Einrichtungen der Polyurethantechnologie einsetzbar.

Es ist durchaus möglich, auch dann noch der Komponentenvormischung gegebenenfalls auch dem Isocyanat, noch weitere Rezepturbestandteile zuzusetzen, z- B. Harnstoff, Harnstoffkondensate, Formaldehydkondensate, Phenolharze, Phosphate, Aminpolyphosphate, Phosphorsäureester, z. B. Trikresylphosphat oder Dibutylkresylphosphat, Al-Oxidhydrate, Glaspulver, Vermiculite, massive oder hohle Glas- oder sonstige Silikatperlchen und sonstige das Brandverhalten modifizierende Zusatzstoffe.

Weiterhin ist in Betracht zu ziehen, auch solche Zusatzstoffe rezepturmäßig in den erfindungsgemäßen Intumeszenzmassen mit einzusetzen, die die Schaumbildung im Falle der Beflammung steigern helfen können. Solche sind beispielsweise aliphatische und insbesondere aromatische Hydroxycarbonsäuren wie Salicylsäure oder p-Hydroxybenzoesäure, PVC, Kohlehydrate oder bei erhöhter Temperatur Gase bzw. Wasser, Stickstoff oder $CO_2$ abgehende Substanzen wie Triazole, Arzodicarbonamide, Sulfohydrazide oder Harnstoffdicarbonsäureanhydrid, Nitrosoverbindungen, Einlagerungsverbindungen von Wasser, Salpetersäure, Kohlensäure, Paraffinen in Graphit, Harnstoff oder Zeolithe.

Man kann aus den erfindungsgemäßen Intumeszenzmassen z. B. durch Einarbeiten in oder Aufrakeln auf Textilien aus organischen oder anorganischen Fasern, durch Sprühen, Verpressen oder Formgießen und Gelieran, durch Schneiden oder Schmelzen, Formkörper oder Beläge fabrizieren, die bei Temperaturen zwischen ca. 200 und 35C$^\circ$ C aufschäumen und so eine Flammenausbreitung verhindern, die also als Dichtelemente, Sicherungsvorrichtung, Brandsperren geeignet sind. Man kann Verfugungen vornehmen, Kabeldurchbrüche, Maueröffnungen verschließen, wobei z. B. auch eine Art Beton aus dem Intumeszenzmittel und Steinen und/oder geblähten Teilchen wie Blähton, Blähglas, Vermiculite, Perlit u. ä. und/oder

auch Schaumstoffperlen auf z. B. Polystyrolbasis hergestellt und verwendet werden kann.

Von Interesse ist auch die Herstellung von Brandschutz vermittelnden Polsterbeschichtungen, Polsterbelägen und Textilbeschichtungen bzw. Textilkaschierungen mittels der neuen, gegebenenfalls flexiblen Intumeszenzmassen.

Ebenfalls ist von Interesse die Herstellung von gegebenenfalls armierten Beschichtungen nahezu beliebiger Dicke auf Metall, z. B. Stahlträger und -blechen, Holz, z. B. Türblätter, Dachbalken, auf Mauerwerk, auf Kunststoffen seien es Kabelisolierungen, Kraftstofftanks, Container oder Schaumstoffplatten. Wenn man die Beschichtungen auf einer tragfähigen Platte oder Stützkonstruktion vornimmt, z. B. in bzw. auf einer Reckmetallplatte, einer Wabenplatte aus Metall, Pappe, Papier, Holz, Keramik oder Kunststoff, dann können so leicht feuerhemmende Platten oder Wandelemente hergestellt werden.

Die Intumeszenzmassen sind auch für die Herstellung von Antidröhnbelägen oder Schallschutzelementen von Interesse, sowie für Zwecke der Energieabsorption.

Auch die Innenbeschichtung von feuerhemmenden Türen, die im Brandfall aufschäumt und isolierend wirkt, ist in Betracht zu ziehen, desgleichen die Herstellung von Tür- oder sonstigen Dichtungen, die im Brandfall aufschäumen und den vorgelagerten Schlitz abdichten. Man kann auch Dichtprofile, z. B. aus elastischem Material, mit den erfindungsgemäßen Intumeszenzmassen füllen oder hinterfüllen und so eine Brandschutzdichtung erzielen. Durch geeignete Anordnung kann man in Kaminen, Lüftungs- und Klimaanlagen, Rohrleitungen und Ein-/Austrittsöffnungen Sperren aufbauen, die im Fall einer Erhitzung auf ca. 300° C, bis 400° C den weiteren Durchtritt von Gasen bremsen oder verhindern. Solche Anordnungen sind z. B. Stapel von in geringen Abständen parallel liegenden Platten, mit den Intumeszenzmassen beschichtete Siebe und Lochblenden oder mit Granulaten der Intumeszenzmassen locker gefüllte Rohrabschnitte, bzw. Rohre und Innenbeschichtung aus den erfindungsgemäßen Intumeszenzmassen. Die gegebenenfalls geschäumten Intumeszenzmassen können auch als Filterelemente für Gase eingesetzt werden, die sich bei zu großer Temperaturerhöhung verschließen.

Das Ausgießen oder Füllen von Hohlprofilen aus Metall, Holz oder Kunststoff mit den Intumeszenzmassen verbessert deren Standvermögen im Brandfalle.

Man kann auch z. B. Formkörper, die aus den Intumeszenzmassen leicht herstellbar sind, oder auch Granulate verschiedenster Körnung ein- oder mehrstufig verschäumen, indem man sie auf Temperaturen über 200° C erhitzt, vorzugsweise auf Temperaturen zwischen 250 bis 1.000° C; insbesondere 300 - 800° C. Die Verschäumung kann frei oder in geschlossenen oder offenen Formen vorgenommen werden, wobei diese Formen zweckmäßigerweise Öffnungen zum Austritt von Dampf und Luft aufweisen sollten.

Hierbei entstehen feuerabweisende Schaumstoffe, sogenannte Carbonisierungsschäume.

Man kann die erfindungsgemäßen Intumeszenzmassen auch auf Trägermaterialien aufbringen und dort verschäumen, z. B. indem man Blähtonteilchen beschichtet, dann in eine Form schüttet und dort erhitzt, wobei ein Block aus in Carbonisierungsschaum eingebettetem Blähton entsteht. Eine entsprechend beschichtete Holz- oder Eisenplatte kann bei ca. 250° C zu einer Schaumstoffkombinationsplatte verarbeitet werden, wobei die Schaumstoffoberfläche durch eine weitere Holz- oder Eisenplatte abgedeckt werden kann.

Zu erwähnen ist auch das Ausschäumen von Hohlräumen, z. B. in Kabelschächten, aber auch in Ziegelsteinen und sonstigen Baustoffen, was z. B. durch Einbringen der Reaktionsmischungen oder fertigen Schaumstoff-Intumeszenzmassen in geeigneter Menge in den Hohlraum des kalten oder noch warmen Steines gelingt.

Die erfindungsgemäßen Intumeszenzmassen sind auch in Form von Rohrhalbschalen oder von Vollmänteln zur Isolierung von Rohren oder Kabeln geeignet. Von Interesse ist, daß die Isolierung auch in situ vorgenommen werden kann, indem man das Rohr oder das zu isolierende Stück mit dem Reaktionsgemisch beschichtet und gegebenenfalls zum Aufschäumen bringt.

Die Herstellung und Verarbeitung der zu den Intumeszenzmassen führenden Reaktionsgemische kann kontinuierlich oder diskontinuierlich erfolgen. Man kann die Komponenten einzeln oder als Gemische zusammenführen. Vorzugsweise werden alle Reaktionskomponenten bis auf das Isocyanat zusammengefaßt, so daß eine 2-Komponentenverarbeitung erfolgen kann, z. B. in normalen Handrührgefäßen mit mechanischen Rührern, in Rührwerks- oder Düsen- oder Sprühmischköpfen oder in Statikmischern, wie sie auch aus der Polyurethanchemie bekannt sind. Die Ausreaktion kann in gekühlten, kalten oder (auf 25 bis ca. 100° C) beheizten Formen drucklos oder unter Druck erfolgen. Auch die Aplikation aus 2-Komponenten-Kartouchen ist von Interesse.

Die erfindungsgemäßen Intumeszenzmassen zeichnen sich dadurch aus, daß sie ihre Intumeszenzeigenschaften auch bei Einwirkung von fließendem Wasser nicht verlieren. Im allgemeinen beginnen sie bei Temperaturen oberhalb von 200° C, insbesondere oberhalb 300° C, aufzuschäumen. In der Flamme expandieren sie um 100 bis über 1.000 Vol.-%, je nach Zusammensetzung und Art der Erhitzung. Sie sind

vorzugsweise halogenfrei formulierbar und können oftmals schwer entflammbar eingestellt werden.

Die erfindungsgemäß zugänglichen Konstruktionselemente für den Brandschutz finden insbesondere dort Verwendung, wo eine Maßnahme des vorbeugenden Brandschutzes durch Beschichtung, Verschalung, Entdröhnung, Abtrennung, Auskleidung, Ausfüllen oder Abdichten von Hohräumen bzw. Bauteilen im Bereich des Hochbaus, Tiefbaus, der Elektrotechnik, des Fahrzeug-, Maschinen- oder Anlagenbaus vorgenommen werden soll und mit dem Auftreten von Schwitzwasser, Anmachwasser für Mörtel oder Zemente, Kondenswasser, Regenwasser oder Grundwasser zu rechnen ist.

Im folgenden soll die Erfindung beispielhaft erläutert werden: die angegebenen Teile sind Gewichtsteile bzw. Gewichtsprozente, soweit nichts anderes vermerkt ist.

Als Polyisocyanate werden beispielhaft folgende Typen eingesetzt:

1. Polyisocyanate
   - Typ A: Technisches 4,4'-Diphenylmethandiisocyanat mit einem Gehalt an Isomeren und ca. 10 % an höherfunktionellen Mehrkernanteilen. Isocyanatgehalt ca. 31 Gew.-%.
   - Typ B: Gleichartiges Isocyanat mit einem etwa doppelten Gehalt an höher kondensierten Anteilen, Isocyanatgehalt ca. 31 Gew.-%.
   - Typ C: Gleichartiges Isocyanat mit einem nochmals etwa verdoppelten Gehalt an höherkondensierten Anteilen. Isocyanatgehalt ca. 31 Gew.-%.
2. Als phosphorhaltige Kondensationsprodukte zur Reaktion mit den Isocyanaten werden technische Produkte mit folgenden idealisierten Strukturen beispielhaft eingesetzt:
   - Typ K: $(C_2H_5O)_2POCH_2N(C_2H_4OH)_2$
   - Typ L: $(CH_3O)_2POCH_2N(C_3H_6OH)_2$ (Isopropyltyp)
   - Typ PE: Glyzerin-gestartetes Polyethylenglykol (Polyether) OH-Zahl ca. 250
3. Carbonisierungshilfsmittel
   - Typ MP: Melaminorthophosphat
   - Typ MPP: Melaminpyrophosphat
   - Typ NPP: Amoniumpolyphosphat
4. Füllstoffe
   - Typ AO: Apyral® B 2 (Al-Hydroxid der Bayer AG) mittlere Korngröße 20-25 $\mu$m, BET-Oberfläche 0,2 $m^2$/gr.
   - Typ GP: Mikroglaskugeln, $\theta$ 75-100 Mikron
   - Typ HP: Alumosilikat-Hohlperlen, $\theta$ ca. 250 Mikron, ca. 300 g/l
   - Typ CC: Kreide Calcidar 40, (Fa. Omia, Köln)
5. Katalysatoren, sonstige Zusätze
   - Typ SO: Zinnoctoat
   - Typ OS: Polyether-Silikon-Porenstabilisator
   - Typ BF: Eisenoxidpigment
   - Typ W: Wasser (natürlicher Wassergehalt, bzw. Zusatz)
   - Typ G: Glyzerin
6. Polyepoxide
   - Typ 20: Bisphenol A-bis-Glycidylether
   - Typ 80: oligomerer Typ 20
   - Typ 22: Gemisch aus Typ 80 und einem Alkylphenylglycidylether 60:40
   - Typ 50: Epoxidharz auf Anilinbasis (Lekutherm® X 50, Bayer AG)
   - Typ 25: 1:1 Gemisch aus Typ 20 und Typ 50
   - Typ 10: Hexahydrophthalsäure-bis-glycidylester

Allgemeine Herstellung:

Die Komponenten 2 - 6 werden zu einer Vormischung verrührt, in diese rührt man bei Raumtemperatur Komponente 1 ein. Nach ca. 10 Sekunden Mischzeit wird in eine Plattenform ausgegossen. Dort erstarrt das Reaktionsgemisch gegebenenfalls unter Aufschäumen innerhalb weniger Minuten. Die Weiterverwendung geschieht nach ca. 24 h Lagerzeit.

Die folgenden Beispiele sind tabellarisch zusammengefaßt.

| Bsp.-Nr. | | 1 | 2 | 3 | 4 | 5 | 6 | 7 | 8 | Vergl. |
|---|---|---|---|---|---|---|---|---|---|---|
| Komponente (Gew.-Tle.) | Typ | | | | | | | | | |
| 1. | A | | | 155 | | | | 60 | | |
| | B | | 125 | | | | 140 | | | |
| | C | 125 | | | 160 | 145 | | 100 | 35 | 120 |
| 2. | K | 100 | | 50 | 100 | 100 | 100 | | 18 | 100 |
| | L | | 100 | 50 | | | | | | |
| | PE | | | 50 | | | | | 17 | |
| 3. | MP | | 75 | 25 | | | | | | |
| | MPP | | 70 | | | 25 | | | | |
| | NPP | 125 | | 100 | 125 | 125 | 175 | 125 | 70 | 100 |
| 4. | AO | 125 | 100 | 80 | 50 | 150 | 172 | 125 | 70 | 100 |
| | GP | | | | 100 | | | | | |
| | HP | | | 20 | | | | | | |
| | CC | | 25 | | 10 | | | 20 | 30 | |
| 5. | SO | 0,5 | 0,6 | 0,5 | 0,5 | 1,5 | 1,5 | 0,4 | 3 | |
| | OS | | 0,01 | | | | 0,02 | | | |
| | BF | 2 | 2,5 | 3 | 2 | 3 | 3 | 2 | 1,5 | 0,4 |
| | W | 0,7 | 0,8 | 0,9 | 0,8 | 1,0 | 1,1 | 0,8 | | |
| | G | | | | | | | 10 | | |
| 6. | 20 | 100 | | | | | | 120 | | |
| | 80 | | | | | | 200 | | | |
| | 22 | | 100 | | | | | | 70 | |
| | 50 | | | 100 | | | | | | |
| | 25 | | | | 100 | | | | | |
| | 10 | | | | | 200 | | | | |
| Intum.-Beflammung (Würfel) | | 2 | 3 | 3 | 3 | 4 | 3 | 2 | 2 | 1-2 |
| Intum. 450° C | | 5 | 5 | 4 | 4 | 5 | 5 | 5 | 3 | 3 |

Aus den hergestellten Intumeszenzplatten wurden Quader mit einer Kantenlänge von 1 cm geschnitten und in einen auf 450° C vorgeheizten Umluftschrank gebracht. Nach 30 Min. wurden die Prüflinge dem Ofen entnommen und die Volumenzunahme festgestellt. Die Intumeszenzeigenschaft wurde wie folgt beurteilt:

| Volumenzunahme in % | Intumeszenz 450° C |
|---|---|
| über 500 | 1 |
| ca. 400 - 500 | 2 |
| ca. 300 - 400 | 3 |
| ca. 200 - 300 | 4 |
| unter 200 | 5 |

Die Beurteilung der Intumeszenzplatten 1 - 16 sind auf der Tabelle mit vermerkt. Desgleichen die Beurteilung der Intumeszenz an gleichartigen Würfeln mit Kantenlänge 0,5 cm, die auf einem Drahtnetz liegend von oben 3 Min. mit der entleuchteten Flamme eines Erdgas-Bunsenbrenners beaufschlagt wurden.

In allen Fällen verlöschten die Flammen an den Prüfkörpern unmittelbar nach Entfernung der Brennerflamme. Es hinterblieb ein nicht nachglühender Carbonisierungsschaum.

Das beobachtete Prüfergebnis war genau gleich, wenn die Prüfkörper zuvor bei Raumtemperatur (RT) in fließendem Wasser über 12 Tage gelagert, dann getrocknet und getestet wurden. Dieses Ergebnis zeigt die gute Wasserbeständigkeit der Intumeszenzplatten.

Der bei Beflammung des Würfels erzeugte Intumeszenzschaum wurde mit Hilfe eines Stempels von 5 $mm^2$ Fläche auf Festigkeit geprüft, indem der Stempel gewichtslos auf den Schaum aufgesetzt und dann belastet wird, bis er in den Intumeszenzschaum einbricht. Das Belastungsgewicht ist dann ein Maß für die Festigkeit des Schaumes. Diese Methode gibt aufgrund des nicht kontrollierbaren geometrischen Aufbaus des bei Beflammung entstehenden Intumeszenzschaumes nur schwankende Werte und liefert selbst bei bis zu 10maliger Wiederholung lediglich Trendaussagen, diese sind jedoch relativ aussagekräftig.

Bei Untersuchungen des Vergleichsmusters und der Beispiele 1 bis 8 zeigt sich, daß die bei den Beispielen 1 - 8 gebildeten Intumeszenzschäume eine etwa 4 - 6 mal größere Festigkeit besitzen als die des ohne Mitverwendung von Polyepoxiden hergestellten Vergleichsmusters.

Läßt man die Musterwürfel in einem auf 700 °C vorgeheizten Tiegelofen aufschäumen und unter Luftzutritt 60 Minuten ausglühen, so ist das Restvolumen bei den Beispielen 1 - 8 etwa 3 mal höher als beim Vergleichsmuster.

Hieraus ergibt sich die brandtechnisch überlegene Qualität der erfindungsgemäßen Intumeszenzmaterialien.

## Ansprüche

**1.** Intumeszenzmassen enthaltend Carborisiervngshilfsmittel, Füllstoffe und gegebenenfalls weitere Hilfsmittel, erhältlich durch Umsetzung von Polyisocyanaten mit gegebenenfalls Phosphor oder Bor enthaltenden, mit Isocyanaten reaktionsfähigen Verbindungen, dadurch gekennzeichnet, daß sie 5 bis 50 Gew.-% Polyepoxide enthalten.

**2.** Gegebenenfalls poröse Intumeszenzmassen gemäß Anspruch 1, erhältlich durch Umsetzung von
   1. Polyisocyanaten vom MDI-Typ, mit (bezogen auf Gesamt-Intumeszenzmaterial)
   2. 5-30 Gew.-% mindestens zwei Hydroxylgruppen aufweisenden phosphorhaltigen Kondensationsprodukten, erhältlich durch Kondensation von gegebenenfalls OH-Gruppen enthaltenden primären oder sekundären aliphatischen, cycloaliphatischen, aromatischen, araliphatischen oder heterocyclischen Mono- und/oder Polyaminen, Carbonylverbindungen und Dialkylphosphiten, gegebenenfalls unter anschließendem Oxalkylieren, und
   3. 9-40 Gew.-% Carbonisierungshilfsmitteln auf Basis von Ammoniumpolyphosphaten und/oder Melaminphosphaten, und
   4. 10-60 Gew.-% anorganischen Füllstoffen und
   5. 0-5 Gew.-% Katalysatoren, Farbpigmenten und Stabilisatoren und
   6. 10-35 Gew.-% Polyepoxiden bzw. Polyepoxidgemischen auf Basis von Bisphenol-A-Glycidylethern.

## Claims

**1.** Intumescent compositions containing carbonization assistants, fillers and optionally further assistants, obtainable by reacting polyisocyanates with compounds which optionally contain phosphorus or boron and are reactive with isocyanates, characterized in that they contain from 5 to 50 % by weight of polyepoxides.

**2.** Optionally porous intumescent compositions according to Claim 1, obtainable by reacting
   1. MDI-type polyisocyanates with (based on the total intumescent material),

2. 5-30 % by weight of phosphorus-containing condensation products containing at least 2 hydroxyl groups, obtainable by condensation of primary or secondary, aliphatic, cycloaliphatic, aromatic, araliphatic or heterocyclic monoamines and/or polyamines which optionally contain OH groups, with carbonyl compounds and dialkyl phosphites, if desired with subsequent oxalkylation, and
3. 9-40 % by weight of carbonization assistants based on ammonium polyphosphates and/or melamine phosphates, and
4. 10-60 % by weight of inorganic fillers, and
5. 0-5 % by weight of catalysts, coloured pigments and stabilizers, and
6. 10-35 % by weight of polyepoxides or polyepoxide mixtures based on bisphenol A glycidyl ethers.

## Revendications

**1.** Masses intumescentes, contenant des adjuvants de carbonisation, des charges et, le cas échéant, d'autres substances auxiliaires, pouvant être obtenues par réaction de polyisocyanates avec des composés contenant éventuellement du phosphore ou du bore, aptes à réagir avec des isocyanates, caractérisées en ce qu'elles contiennent 5 à 50 % en poids de polyépoxydes.

**2.** Masses intumescentes éventuellement poreuses suivant la revendication 1, obtenues par réaction

1. de polyisocyanates du type MDI avec (par rapport à la matière intumescente totale)
2. 5 à 30 % en poids de produits phosphorés de condensation présentant au moins deux groupes hydroxyle, obtenus par condensation de monoamines et/ou de polyamines primaires ou secondaires aliphatiques, cycloaliphatiques, contenant éventuellement des groupes OH aromatiques, araliphatiques ou hétérocycliques, de composés carbonyliques et de phosphites de dialkyle, le cas échéant suivie d'une oxalkylation, et
3 9 à 40 % en poids d'adjuvants de carbonisation à base de polyphosphates d'ammonium et/ou de phosphates de mélamine, et
4. 10 à 60 % en poids de charges inorganiques et
5. 0 à 5 % en poids de catalyseurs, de pigments colorés et d'agents stabilisants et
6. 10 à 35 % en poids de polyépoxydes ou de mélanges de polyépoxydes à base d'éthers de glycidyle du bisphénol A.